# EUROPEAN PATENT SPECIFICATION

(11) **EP 2 868 880 B1**
(45) Date of publication and mention of the grant of the patent: **02.01.2019**
(21) Application number: 13791635.9
(22) Date of filing: 15.05.2013
(51) Int. Cl.: F01N 3/01, B01D 50/00, F01N 3/02, F01N 3/037, B01D 45/08, B01D 45/12, B03C 3/14, B03C 3/15, B03C 3/40, B03C 3/41, B03C 3/49, B03C 3/017, B03C 3/02, B03C 3/06, B03C 3/36, B03C 3/88, F02M 26/35

(54) **EXHAUST GAS TREATMENT DEVICE FOR MARINE DIESEL ENGINE USING FUEL OF LOWER QUALITY THAN HEAVY OIL**
ABGASBEHANDLUNGSVORRICHTUNG FÜR SCHIFFSDIESELMOTOR MIT BRENNSTOFF VON MINDERER QUALITÄT ALS SCHWERÖL
DISPOSITIF DE TRAITEMENT DE GAZ D'ÉCHAPPEMENT POUR MOTEUR DIESEL MARIN UTILISANT UN CARBURANT DE QUALITÉ INFÉRIEURE À CELLE DE L'HUILE LOURDE

(30) Priority: 15.05.2012 JP 2012111956
(43) Date of publication of application: 06.05.2015
(73) Proprietor: Usui Kokusai Sangyo Kaisha Limited, Shizuoka 411-8610 (JP)
(72) Inventor: FURUGEN, Munekatsu, Nishinomiya-shi Hyogo 662-0875 (JP); MAKINO, Tadashi, Takatsuki-shi Osaka 569-1020 (JP); TAKIKAWA, Kazunori, Sunto-gun Shizuoka 411-8610 (JP)
(74) Representative: Hoppe, Lars
(86) International application number: PCT/JP2013/063542
(87) International publication number: WO 2013/172380

(56) References cited:
- WO-A1-2011/046187
- JP-A- H05 222 915
- JP-A- S59 502 059
- JP-A- 2005 349 264
- JP-A- 2006 136 766
- JP-A- 2009 052 440
- JP-A- 2011 157 960
- JP-A- 2012 509 427
- JP-U- H0 195 519
- JP-U- S57 117 711

## Description

### Technical Field

The present invention relates to an exhaust gas treatment technique of a large displacement diesel engine, particularly using lower-grade fuel than fuel oil, such as for marine use, for power generation or for industrial use, for removing particulate matter (hereinafter, called "PM") mainly composed of carbon, or harmful gas contained in exhaust gas of a diesel engine to purify the exhaust gas, and more particularly relates to an exhaust gas treatment equipment for a marine diesel engine utilizing corona discharge in a large displacement diesel engine exhausting high-temperature exhaust gas.

### Background Art

Diesel engines have been widely adopted as power sources for various watercrafts, power generators, large construction machines, and further, various automobiles, but since the PM contained in exhaust gas exhausted from the diesel engines, as is well known, not only causes air pollution, but also is extremely harmful to human bodies, it is highly important to purify the exhaust gas. Therefore, many suggestions have already been made, such as improvement of combustion systems of diesel engines, adoption of various types of exhaust gas filters, or electrical treatment methods using corona discharge, and some of such suggestions have been in practical use.

Here, components of the PM (particulate matter) in exhaust gas from a diesel engine can be classified to two components of soluble organic fractions (hereinafter called "SOF") and insoluble organic fractions (hereinafter called "ISF"). The SOF component of these components is mainly composed of unburnt components of fuel or lubrication oil, and it contains harmful substances such as carcinogenic polycyclic aromatic. On the other hand, the ISF component is mainly composed of low electrical resistive carbon (soot) and sulfate components, and it is desired that exhaust gas contains the SOF and ISF components in as a small amount as possible in view of influence of these SOF and ISF components to a human body and an environment. In particular, it is also said that the degree of the harmful effect of PM on human bodies is problematic especially when the particulate size of the PM is nanometer size.

As the method for performing electrical treatment utilizing corona discharge, methods and equipments described below (Patent Literatures 1 to 6) have been proposed.

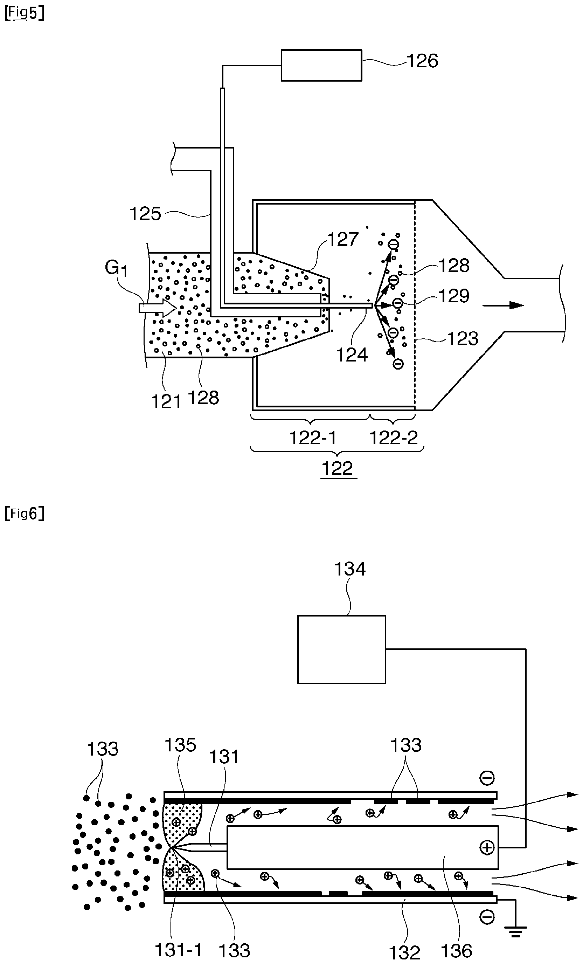

That is, Patent Literature 1 has proposed, as schematically shown in Figure 5, an electrical treatment method and equipment for exhaust gas of a diesel engine, adopting a system where a discharging and charging portion 122 composed of a corona discharging portion 121-1 and a charging section 122-2 is provided in an exhaust gas passage 121, so that electrons 129 corona-discharged is charged to PM 128 mainly composed of carbon in exhaust gas G1 and the charged PM 128 is then collected by a collection plate 123 disposed in the exhaust gas passage 121, and configured such that a length of an electrode needle 124 in the discharging and charging portion 122 is short in a flow direction of an exhaust gas stream, and the collection plate 123 is disposed to be perpendicular to the flow direction of the exhaust gas stream. In Figure 5, reference sign 125 denotes a seal gas pipe, 126 denotes a high-voltage power source apparatus, and 127 denotes an exhaust gas guide pipe.

Patent Literature 2 has proposed, as schematically shown in Figure 6, an exhaust gas PM-collecting equipment for a diesel engine, comprising a needle electrode 131 for causing corona discharge 135 around a needle tip 131-1 to charge PM 133 in exhaust gas, a collecting electrode 132 for collecting charged PM 133, and a high-voltage direct-current power source 134 for applying a predetermined direct-current high voltage between the needle electrode 131 and the collecting electrode 132. In Figure 6, reference sign 136 denotes a deflection electrode.

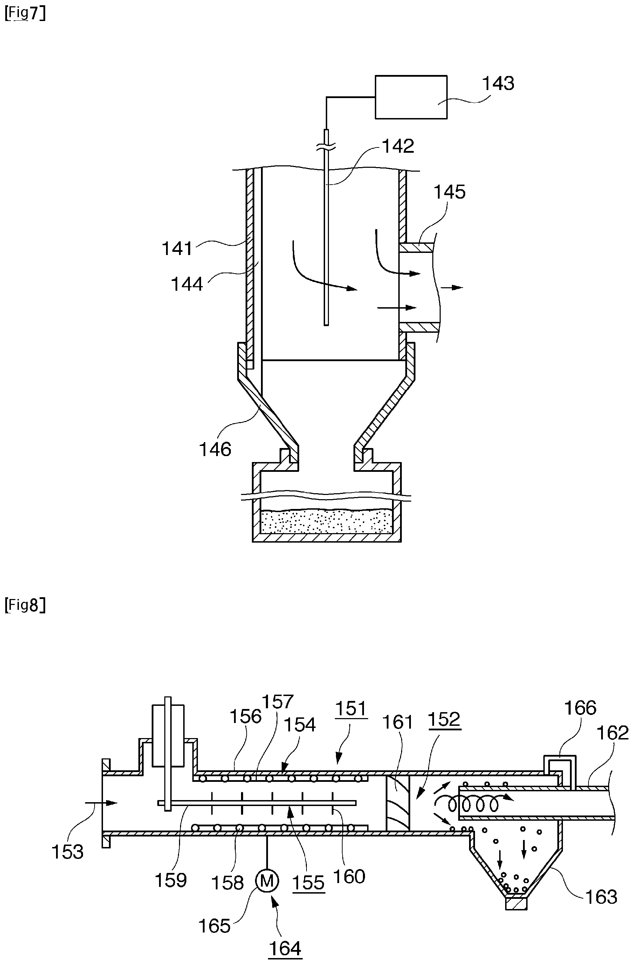

Patent Literature 3 has proposed, as schematically shown in Figure 7, an exhaust gas purifying equipment, comprising a fixed cylinder 141 constituting one of a pair of collecting electrodes for PM collection provided in an exhaust gas route, an electrode rod 142 provided to extend at a central portion of the fixed cylinder 141 in an axial direction to constitute the other of the pair of collecting electrodes, a high-voltage power source 143 for forming electrostatic field between the pair of collecting electrodes to accumulate PM in exhaust gas on an inner face of the fixed cylinder 141, and a scrapping-off portion 144 rotating relative to the fixed cylinder along the inner face of the fixed cylinder 141 to scrap off the PM accumulated on the inner face of the fixed cylinder. In Figure 7, reference sign 145 denotes an exhaust gas pipe, and 146 denotes a rotational cylindrical portion.

Patent Literature 4 has proposed an exhaust gas purifying equipment for a diesel engine, comprising an electrical precipitation means having a discharging electrode for charging PM contained in exhaust gas of an diesel engine and a precipitation electrode for collecting the charged PM, a means for detaching the PM retained after the collection by the precipitation electrode from the precipitation electrode, and a separation and collection means of a cyclone system for separating PM detached from the collecting electrode to collect the same.

This equipment, as one example thereof is shown in Figure 8, is configured to perform treatment while causing exhaust gas to flow in a lateral direction and to include an electrical precipitation part 151 for collecting PM and a cyclone 156 serving as a separating and collecting member, the electrical precipitation part 151 including: a precipitation electrode 154 composed of a cylindrical metal body 157 attached to an inner circumferential face of a cylindrical housing 156 and a concavo-convex portion 158 formed on an inner circumferential face of the cylindrical metal body; a main electrode 159 extending along an axial line of the precipitation electrode 154; and a discharging electrode 155 composed of a group of electrode needles 160 projecting radially and arranged at predetermined intervals in a longitudinal direction of the main electrode 159, the cyclone 152 being placed in a region downstream of a guide vane 161 that converts a flow of gas 153 passed through the electrical precipitation part 151 into a swirl flow, and an exhaust gas pipe 162 for exhausting gas in the cyclone and a hopper 163 for collecting centrifuged PM are provided downstream of the cyclone 152. Reference sign 164 denotes a detaching mechanism for detaching PM retained after collection by the precipitation electrode 154 from the precipitation electrode, which is constituted of an eccentric motor 165 generating vibrations due to eccentricity, for example. Reference sign 166 denotes a gas extracting pipe for causing exhaust gas in the exhaust gas pipe 162 to return to an upper space above the hopper 163.

In other words, according to the exhaust gas purifying equipment, PM contained in exhaust gas flown into the electrical precipitation part 151 is charged by discharge performed between the precipitation electrode 154 and the discharge electrode 155 and is collected in the precipitation electrode 154 owing to Coulomb's force, the collected PM flows into the guide vane 161 together with a gas flow and is then centrifuged by the cyclone 152 that is arranged downstream of the cyclone 161, so that the centrifuged PM drops within the hopper 163 to be collected therein, while the purified gas is discharged outside via the exhaust gas pipe 162.

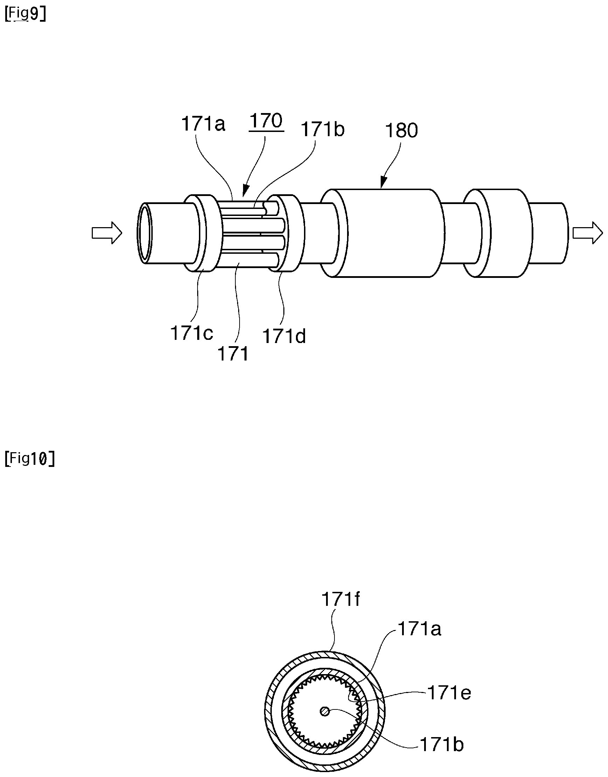

Patent Literature 5 has proposed a gas treatment equipment comprising a charging and agglomerating part for charging and agglomerating, by corona discharge, target components to be collected in exhaust gas of a diesel engine mounted on an automobile, and a filter part for collecting the agglomerated components. As shown in Figures. 9 and 10, the gas treatment equipment has a configuration wherein : the charging and agglomerating part 170 is disposed upstream and the filter 180 is disposed downstream; a gas passage wall of the charging and agglomerating part 170 is formed of tubular bodies 171, 171a, etc.; and a precipitation electrode, which is a low-voltage electrode, is formed of a conductive cylinder 171f disposed in the vicinity of the surface of the gas passage wall; corona electrodes are formed of wire-like high-voltage electrodes disposed inside these tubular bodies, and the tubular body of the gas passage wall is formed as a gas cooling part where natural convection and heat radiation cool gas naturally; and further a turbulence promoting means 171e for promoting disturbance of a gas stream passing in the vicinity of an inner surface of the tubular body of the gas passage wall or the conductive tubular body is disposed on the surface of the tubular body or in the vicinity of the surface thereof. In the figure, reference sign 171c denotes a gas inlet chamber, 171b denotes a corona electrode, and 171d denotes a gas outlet chamber.

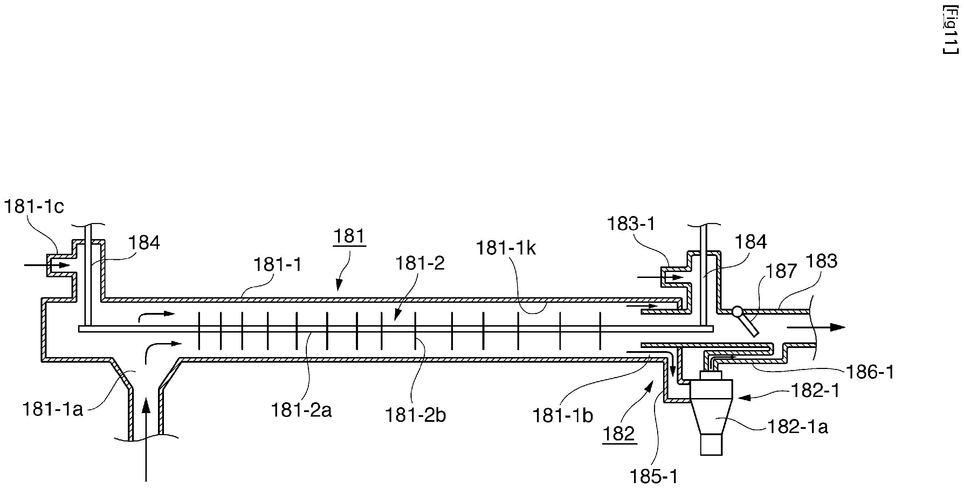

Patent Literature 6 has proposed an exhaust gas treatment equipment for a diesel engine, using fuel lower in quality than fuel oil, is described as shown in Figure 11. The exhaust gas treatment equipment is roughly composed of a tubular collecting part 181 constituting an electrical precipitation means and a separating and collecting part 182 constituting a separation and collection means, the tubular collecting part 181 for collecting PM particulates comprising a predetermined length of a collecting pipe 181-1 ,that constitute a precipitation electrode and has a collecting wall face 181-1k, and a discharging electrode 181-2 for charging PM contained in exhaust gas. The collecting pipe 181-1 constituting the precipitation electrode has an introduction port 181-1a for exhaust gas on an end of an upstream side (on a diesel engine side), and on an end of the downstream side, a PM low-concentration exhaust gas outlet pipe 183 and a PM high-concentration exhaust gas outlet portion 181-1b are continuously provided in the vicinity of an axial center of the end and in the vicinity of an inner circumferential face of the end, respectively. The discharging electrode 181-2 is composed of a main electrode 181-2a extending in the vicinity of the axial center of the collecting pipe 181-1 constituting the precipitation electrode over an almost whole length thereof, and a group of electrode needles 181-2b projecting radially and arranged at predetermined intervals in a longitudinal direction of the main electrode 181-2a. In the discharging electrode 181-2 thus configured, both end portions of the main electrode 181-2a are supported through a seal air introduction pipe portion 181-1c provided on the side of the exhaust gas introduction port 181-1a of the collecting pipe 181-1 and a support 184 provided in a seal air introduction pipe portion 183-1 provided in a suspending fashion in a region of an inlet of the PM low-concentration exhaust gas outlet pipe 183. It should be noted that the discharging electrode 181-2 is supported with a desired distance by a stay insulated from inside of the collecting pipe 181-1 according to necessity. Further, the discharge electrode 181-2 is wired to a high-voltage power source equipment (not shown) installed outside to receive supply of a controlled high-voltage power source.

The separating and collecting part 182 provided on the downstream side of the tubular collecting part in the flow direction of exhaust gas is composed of a cyclone collecting means 182-1 serving as a separating means. The cyclone collecting means 182-1 is composed of a tangential cyclone 182-1a connected to the PM high-concentration exhaust gas outlet portion 181-1b of the collecting pipe 181-1 via a communication pipe 185-1, and an exhaust pipe 186-1 for joining purified gas after passing through the tangential cyclone 182-1a to PM low-concentration exhaust gas flowing in the PM low-concentration exhaust gas outlet pipe 183 is further disposed between the tangential cyclone 182-1a and the PM low-concentration exhaust gas outlet pipe 183. Further, the PM low-concentration exhaust gas outlet pipe 183 is provided with a flow rate control damper 187 for adjusting an inflow amount and an inflow speed of PM high-concentration exhaust gas into the tangential cyclone 182-1a and a flow rate of a discharge amount of PM low-concentration exhaust gas.

An exhaust gas treatment equipment for a diesel engine shown in Figure 12 as another equipment in Patent Literature 6 has a configuration similar to that of the above-described equipment except that the cyclone collecting means 182-1 is constituted of two tangential cyclones 182-1a. That is, the cyclone collecting means 182-1 is configured by connecting two tangential cyclones 182-1a to the PM high-concentration exhaust gas outlet portion 181-1b of the collecting pipe 181-1 via communication pipes 185-1 and 185-2 in parallel, and exhaust pipes 186-1 and 186-2 for joining purified gases after passing through the respective tangential cyclones 182-1a to PM low-concentration exhaust gas flowing in the PM low-concentration exhaust gas outlet pipe 183, respectively, are also arranged in this case.

Next, a cyclone collecting means in Patent Literature 6 shown in Figure 13 is composed of a plurality of tangential cyclones different in throughput, for example, three kinds of a small-throughput tangential cyclone 182-1b, a middle-throughput tangential cyclone 182-1c, and a large-throughput tangential cyclone 182-1d, and it is constituted by connecting respective tangential cyclones 182-1b, 182-1c, and 182-1d to the PM high-concentration exhaust gas outlet portion 181-1b of the collecting pipe 181-1 via communication pipes 188-1, 188-2 and 188-3 connected at radial positions of the PM high-concentration exhaust gas outlet portion 181-1b and providing flow rate control dampers 189-1, 189-2, and 189-3 at PM high-concentration exhaust gas introduction ports of the respective communication pipes 188-1, 188-2, and 188-3.

When the cyclone collecting means is constituted of a plurality of tangential cyclones different in throughput, it becomes possible to not only perform proper selection and use of the respective tangential cyclones in response to an exhaust gas flow rate changing according to change of an operation situation or a load factor of an engine accompanied by a parallel operation or a single operation of a main machine and an auxiliary machine of a marine engine but also control an inflow tangential speed of exhaust gas into the respective tangential cyclones more appropriately by controlling the flow rate control dampers 189-1, 189-2 and 189-3 provided to the respective tangential cyclones as well as the damper arranged in the PM low-concentration exhaust gas outlet pipe 183.

The Patent Literature JP S57 117711 U, against which claim 1 is delimited, discloses a collection device of combustion exhaust which is provided with an electric dust collector 1 that generates an electric field between a rod-like discharge electrode 2 which is provided at the center portion and is applied with high voltage and a dust-collecting container 4 which is provided around the discharge electrode 2 and forms the dust-collecting electrode 3, wherein combustion exhaust gas flows into the container from one end of the container, and the exhaust gas flowing out of the container from the other end of the container is discharged towards a first exhaust pipe 7 via a filter 9 for collecting the combustion particulate, and an exhaust gas inlet opening 10a of a second exhaust pipe 10 is provided right at the downstream side of a downstream free end 2b of the discharge electrode in the dust-collecting container.

### Citation List

### Patent Literature

PTL 1: WO2006/064805B
PTL 2: Japanese Patent Application Laid-Open No. H09-112246
PTL 3: Japanese Patent Application Laid-Open No. H06-173637
PTL 4: Japanese Patent Application Laid-Open No. 2006-136766
PTL 5: Japanese Patent No. 4529013
PTL 6: Japanese Patent Application Laid-Open No. 2010-256160

### Summary of Invention

### Technical Problem

However, the conventional exhaust gas purifying equipments for a diesel engine described above have the following defects.

Specifically, the electrical treatment method and equipment for exhaust gas of a diesel engine described in Patent Literature 1 has problems as follows: high flow resistance (pressure loss) due to the configuration in which the length of the electrode needle 124 in the discharging and charging part 122 is short in the flowing direction of the exhaust gas stream and the collection plate 123 is so disposed as to be perpendicular to the flowing direction of the exhaust gas stream, and in which the exhaust gas stream directly hits the collection plate 123; a possibility that since the collection plate 123 is thin and short in length in the flowing direction of the exhaust gas stream, the PM collection efficiency thus could not sufficiently be increased; and that once the PM passes through the collection plate 123, the PM may not be charged by corona discharge or collected again, and may be exhausted as it is.

In addition, Patent Literature 1 neither discloses nor suggests such a technical idea that the collection plate is formed in a tubular shape lengthened in the flow direction of the exhaust gas and an electrode needle is provided in a tube-axial direction of the tubular collecting part, where a jumping phenomenon repeating accumulation and detachment of PM particulates while causing the PM particulates to flow in the flow direction of the exhaust gas flow is developed and growth of the PM particulates is caused so that according to the growth phenomenon, particle diameters of the PM in the exhaust gas flow in the vicinity of an inner face of the tubular collecting part are coarsened such that the PM particulates are easily collected by the cyclone and the concentration of the PM is increased, and an exhaust gas flow where the particle diameters of PM are large diameters and the concentration of the PM has been condensed to a high level is selectively extracted to collect much of PM particulates by the cyclone and PM particulates left slightly without being collected are recirculated to the introduction pipe (exhaust gas pipe) to be re-coarsened and re-collected .

The exhaust gas PM-collecting equipment described in Patent Literature 2 and the exhaust gas purifying equipment described in Patent Literature 3 also have the following defects: since the discharge voltage and the collecting deflection voltage are the same potential, it is difficult to set both the voltages to proper conditions thereof; since a spacing between the deflection electrode and the collecting electrode must be made large in order to prevent spark generation therebetween; PM bypassing a collecting portion without being collected increases due to the setting of the spacing, which results in lowering of a collection efficiency; and since it is necessary to take the capacity of the collecting portion large in order to increase the collecting efficiency, the equipment must be size-enlarged, which is improper as a marine part desired for size reduction and weight reduction, and the like.

Further, Patent Literature 2 describes that a tunnel-like electrode serving as a passage for exhaust gas is adopted, an electrode assembly of the needle electrode 131 and the deflection electrode 136 is disposed within the tunnel of the collecting electrode 132 such that an axial center thereof is approximately coincident with an axial center of the tunnel, and the electrode assembly which is thick and elongated is inserted into the tubular collecting part over an approximately entire length to be formed in a grid shape. Patent Literature 3 describes: "an electrode rod constituting on one of a pair of discharging electrodes and one of a pair of collecting electrodes is suspended along a center line of a fixed cylinder, ···an exhaust gas port having a large diameter is provided in a lower side face of the fixed cylinder, a downstream side exhaust gas pipe is fitted in the exhaust gas port···" in the paragraph [0033], Example 6; "a rotational cylindrical portion has a lower portion formed in a small-diameter truncated cone···an elongated bar (scrapping-off portion)44 is provided upward from an inner face of the rotational cylindrical portion in a standing manner, an outer edge of the bar is in contact with an inner face of a large-diameter portion of the fixed cylinder." in the paragraph [0035]; "···diesel particulates ···by corona discharge between the electrode rod and the fixed cylinder in a discharge space··· charged diesel particulates are attracted by electrostatic field to be accumulated on the inner face of the large-diameter portion of the fixed cylinder." in the paragraph [0036]; and "according to rotation of the rotational cylindrical portion, the bar is rotated at a low speed while being in contact with the inner face of the large-diameter portion of the fixed cylinder to drop a diesel particulate layer accumulated on the inner face of the large-diameter portion, ··· the dropped diesel particulates are collected in a collection box, ···can be removed." in the paragraph [0037], according to these descriptions, a tubular collecting part is formed. Patent Literature 3 thus provides a technique where the collecting electrode is constituted as a fixed cylindrical portion (tubular) elongated in a flow direction of an exhaust gas flow and electrode needles are provided with intervals in a tube-axial direction of the tubular collecting part, PM is accumulated while being caused to flow in the flow direction of the exhaust gas flow, and the accumulated PM particulates are scraped off by the bar, which technique is largely apprehended that PM particulates scattered at a scraping-off time are partially exhausted through a downstream side exhaust gas pipe fitted in a large-diameter exhaust gas port provided in front of the collecting box.

Therefore, as is the case with Patent Literature 1, Patent Literatures 2 and 3 neither disclose nor suggest such a technical idea that the collection plate is formed in a tubular shape lengthened in the flow direction of the exhaust gas flow and an electrode needle is provided in a tube-axial direction of the tubular collecting part, where a jumping phenomenon repeating accumulation and detachment of PM particulates while causing the PM particulates to flow in the flow direction of the exhaust gas flow is developed and growth of the PM particulates is caused so that according to the growth phenomenon, particulate diameters of the PM in the exhaust gas flow in the vicinity of an inner face of the tubular collecting part are coarsened so as to collect the PM particulates by the cyclone easily and the concentration of the PM is increased, and an exhaust gas flow where the particulate diameters of PM are large diameters and the concentration of the PM has been condensed to a high level is selectively extracted to collect much of PM particulates by the cyclone and PM particulates left slightly without being collected are recirculated to the introduction pipe (exhaust gas pipe) to be re-coarsened and re-collected.

As for the exhaust gas purifying equipment for a diesel engine described in Patent Literature 4, it employs a system where PM particulates collected on the precipitation electrode 154 and the inner circumferential (collecting pipe wall) of the cylindrical housing 156 in the electrical precipitation part 151 form large masses, the PM masses are detached from the precipitation electrode 154 and the collecting pipe wall due to natural delamination or by a mechanical detaching mechanism and are mixed with one another, and the PM masses detached and mixed are centrifuged from exhaust gas in the cyclone 152 to be re-collected into the hopper 163. This system has the following defects: since a whole amount of exhaust gas is caused to flow in the cyclone 152 through the guide vane 161 arranged in the cylindrical housing 156 and accompanied by mixing of the whole amount of the exhaust gas to centrifuge PM, a large-sized cyclone 152 having a large-sized guide vane 161 disposed therein is required necessarily, which results in increase of an installation cost and a running cost; since a plurality of cyclones 152 cannot be installed structurally, a large-scale increase/decrease of the exhaust gas flow rate due to large fluctuation of the load factor of the engine cannot be accommodated; and since a means for controlling an exhaust gas flow rate at the cyclone introduction portion properly is not provided, such a problem as deterioration of a fuel consumption due to excessive pressure loss in the cyclone cannot be solved while a high PM collecting efficiency is being maintained.

Additionally, in Patent Literature 4, the collection plate is formed in a tubular shape elongated in the flow direction of the exhaust gas flow and the electrode needle is provided in the tube-axial direction of the tubular collecting part, so that PM particulates are accumulated in the vicinity of the inner face of the tubular collecting part while being caused to flow in the flow direction of the exhaust gas flow and they are collected by the cyclone, however, Patent Literature 4 neither discloses nor suggests such a technical idea that particulate diameters of the PM in the exhaust gas flow are coarsened so as to collect the MP particulates by the cyclone easily, the concentration of the PM in the exhaust gas flow in the vicinity of the inner face of the tubular collecting part is increased, and only a flow in the vicinity of the inner face of the tubular collecting part in an exhaust gas flow where the particulate diameters of PM are large diameters and the concentration of the PM has been condensed to a high level is selectively extracted to collect much of PM particulates intensively by the cyclone and PM particulates left slightly without being collected are recirculated to the introduction pipe (exhaust gas pipe) to be re-coarsened and re-collected, as is the cases with Patent Literatures 1 to 3.

The gas treatment equipment described in Patent Literature 5 is a small-sized gas treatment equipment for vehicle mounting and has such a configuration that the charging and agglomerating part 170 and the filter 180 are respectively arranged on the upstream side and on the downstream side, a gas inlet chamber 171c for dividing exhaust gas to many branch flows is provided in the charging and agglomerating part 170, and the cylinder 171f forms a gas passage wall and is exposed to external air so that the cylinder 171f serving as the gas passage wall is formed as a gas cooling portion for cooling gas according to natural convention and natural heat dissipation based upon thermal radiation, and divided exhaust gases are then re-mixed in the gas outlet chamber 171d. Thus, this technique may cause exhaust gases flowed out of the tubular collecting part to be re-mixed prior to a collecting step of PM particulates. The gas treatment equipment described in Patent Literature 5 has such a defect that a turbulence promoting means 171e to a gas flow is provided on an inner surface of the cylinder 171f or in the vicinity of the inner surface, so that turbulence of gas is particularly facilitated in the vicinity of the surface of the cylinder, which results in enlargement of fanning action in a sectional direction of a flow passage.

In addition, Patent Literature 5 provides the equipment that is configured such that the collecting wall is formed as the tubular cylinder elongated in the flow direction of the exhaust gas flow and the electrode needle is provided in the tube-axial direction of the tubular collecting part so that while PM particulates are caused to flow in the flow direction of the exhaust gas flow, they are accumulated and collected in the vicinity of the inner face of the tubular collecting part. However, Patent Literature 5 neither discloses nor suggests such a technical idea that particulate diameters of the PM in the exhaust gas flow are coarsened so as to collect the PM particulates by the cyclone installed on the downstream side easily and the concentration of the PM in the exhaust gas flow in the vicinity of the inner face of the tubular collecting part is increased, and only a flow of an exhaust gas flow in the vicinity of the inner face of the tubular collecting part where the particulate diameters of PM are large diameters and the concentration of the PM has been condensed to a high level is selectively extracted to collect much of PM particulates intensively by the cyclone, and PM particulates left slightly without being collected are recirculated to the introduction pipe (exhaust gas pipe) to be re-coarsened and re-collected, as is the cases with Patent Literatures 1 to 4.

The gas treatment equipment described in Patent Literature 6 employs a complicated equipment where the separating and collecting part 182 is constituted of the tangential cyclone 182-1a or the plurality of tangential cyclones different in throughput, for example, three kinds of a small-throughput tangential cyclone 182-1b, a middle-throughput tangential cyclone 182-1c, and a large-throughput tangential cyclone 182-1d. Further, it was necessary to collect PM particulates securely by the respective cyclones while flow speeds of exhaust gases flowing in the respective cyclones were controlled to be optimal and to join exhaust gases where the gases exhausted from the respective cyclones were lowered securely regarding the low concentrations of PM therein and were diluted to the PM low-concentration exhaust gas outlet pipe 183 from the exhaust gas exhaust pipes 186-1 and 186-2.

Further, in the gas treatment equipment described in Patent Literature 6, there is such an apprehension that when a single tangential cyclone 182-1a is installed as the separating and collecting part 182, a precipitation characteristic of the tangential cyclone equipment has a velocity dependency of a gas flow flowing in the tangential cyclone equipment, so that a fluctuation range of operation conditions capable of obtaining a high collection efficiency, such as a rotation speed or a load factor of an engine is somewhat restricted. On the other hand, the tangential cyclone 182-1a is composed of a plurality of tangential cyclones different in throughput or is composed of three kinds of a small-throughput tangential cyclone 182-1b, a middle-throughput tangential cyclone 182-1c, and a large-throughput tangential cyclone 182-1d as the separating and collecting part 182 so that the apprehension where the operation conditions are restricted is reduced, but such a apprehension occurs that the equipment is large-sized and control is complicated.

The present invention has been made in order to solve the above-described defects of the conventional arts, and thus provides an exhaust gas treatment equipment for a marine diesel engine, wherein a delivery pipe for exhaust gas having a low concentration of particulate matter is provided in the vicinity of an axial center of a tubular collecting part on a downstream side thereof and a delivery portion for exhaust gas having a PM high-concentration is provided in the vicinity of an inner circumferential face of the tubular collecting part on the downstream side; a precipitation means for collecting the particulate matter is provided to be continuous to the PM high-concentration exhaust gas delivery portion; a recirculation pipe for causing purified gas to recirculate from the precipitation means in between a marine diesel engine and the tubular collecting part is provided; a kinetic energy imparting means to exhaust gas recirculating in the recirculation pipe is provided; and an exhaust gas inflow velocity into the precipitation means is controlled by controlling an opening degree of a damper arranged in the PM low-concentration exhaust gas delivery pipe and/or by controlling the kinetic energy imparting means to the exhaust gas, particularly instead of the system of the exhaust gas purifying equipment for a diesel engine constituting the cyclone by arranging a guide vane inside the passage through which an entire amount of exhaust gas flows as disclosed in Patent Literature 4 and the gas treatment equipment described in Patent Literature 6 where a plurality of tangential cyclones different in throughput, for example, three kinds of a small-throughput tangential cyclone, a middle-throughput tangential cyclone, and a large-throughput tangential cyclone constitute the separation and collection means.

### Solution to Problems

According to the present invention, which is defined by claim 1, an exhaust gas treatment equipment for a marine diesel engine using lower-grade fuel than fuel oil includes: an electrical precipitation means having a discharging electrode for charging particulate matter contained in exhaust gas of a marine diesel engine using lower-grade fuel than fuel oil, and a predetermined length of a tubular collecting part for constituting a precipitation electrode for collecting the charged particulate matter, the discharge electrode being composed of a main electrode arranged in a tube axis direction of the tubular collecting part and a plurality of electrode needles, the electrode needles being disposed at intervals on the main electrode and projecting radially; and a precipitation means for separating and collecting the particulate matter detached from the tubular collecting part, characterized in that an exhaust gas delivery pipe for particulate matter of low concentration is provided in the vicinity of an axial center on a downstream side of the tubular collecting part, an exhaust gas delivery portion for particulate matter of high concentration is provided in the vicinity of an inner circumferential face on the downstream side of the tubular collecting part, said precipitation means for collecting the particulate matter is provided to be continuous to the exhaust gas delivery portion for the particulate matter of high concentration, a recirculation pipe for causing purified gas after passing through the precipitation means to recirculate is provided from the precipitation means to an exhaust gas introduction pipe that is provided at an upstream end of the tubular collecting part, and a flow rate control damper is provided in the low-PM-concentration exhaust gas delivery pipe, and a kinetic energy imparting means to exhaust gas recirculating in the recirculation pipe is arranged so that an exhaust gas inflow velocity into the precipitation means is controlled by controlling an opening degree of a damper arranged in the exhaust gas delivery pipe for particulate matter of low concentration and/or the kinetic energy imparting means to the exhaust gas.

The exhaust gas treatment equipment may further comprise, on the recirculation pipe, a branching portion and an EGR pipe and an EGR valve, the EGR pipe and the EGR valve being connected to the branching portion.

As the precipitation means of the above-described equipment of the present invention, a tangential cyclone or an impactor-type inertial particle separator can be adopted.

Further, the equipment of the present invention has a preferable aspect where an exhaust gas cooler is provided upstream of the tubular collecting part continuous to an exhaust manifold of a marine diesel engine and the recirculation pipe is arranged between a further upstream part of the exhaust gas cooler and the precipitation means.

In the equipment of the present invention, it is preferable to adopt a blower or a high-pressure gas jetting nozzle as the kinetic energy imparting means to exhaust gas recirculating in the recirculation pipe.

Further, it is preferable that the recirculation pipe is arranged such that exhaust to be recirculated gas flows in the exhaust gas pipe at an inflow angle having an inclination angle of 15° to 60° to the exhaust gas pipe.

Further, it is adopted as a preferable aspect that the recirculation pipe projects into the exhaust gas pipe and is opened toward an exhaust gas outflow direction.

Further, the present invention has a preferable aspect that a scrubber which further purifies exhaust gas is disposed in the EGR pipe.

Further, the equipment of the present invention has a preferable aspect that an EGR cooler which cools EGR gas is provided on the EGR pipe.

Further, the equipment of the present invention has a preferable aspect that a steam separator which separates and removes condensed water is arranged at least one part of an exhaust gas pipe between the exhaust gas cooler and the electrical precipitation means, an EGR pipe between the scrubber and the EGR cooler, and an EGR pipe downstream of the EGR cooler.

### Advantageous Effects of Invention

The exhaust gas treatment equipment for a marine diesel engine using fuel lower in quality than fuel oil according to the present invention achieves the following advantageous effects.
(1) Since PM in exhaust gas is collected by a tubular collecting wall face to form a mass in the tubular collecting part, while the PM mass repeats adhesion to and detachment from the tubular collecting wall face, the PM is gradually condensed in the vicinity of the tubular collecting wall face so that the exhaust gas flows downstream as an exhaust gas flow containing PM in a high concentration, high-concentration exhaust gas of PM which has been separated from low-concentration exhaust gas which contains PM only in a low concentration due to gradual dilution of PM occurring in the vicinity of the axial center of the tubular collecting part is branched from the high-PM-concentration exhaust portion in the vicinity of the tubular collecting wall face to the tangential cyclone or the impactor-type inertial particle separator which is the duct collecting means, the branched high-PM-concentration exhaust gas is imparted with kinetic energy by the blower to be guided to the collecting portion composed of the tangential cyclone or the impactor-type inertial particle separator as a high-pressure/high-velocity flow, and much of PM particulates are collected in the collecting portion, while PM particulates which have been left slightly without being collected are recirculated to the introduction pipe (exhaust gas pipe), so that an exhaust flow from the cyclone or the like and PM low-concentration exhaust gas from the tubular collecting part are prevented from being mixed to be exhausted, the PM concentration in the exhaust gas can be made significantly low stably for a long period of time and a high cleanliness factor is maintained in the equipment of the present invention.
(2) since an exhaust flow from the collecting portion such as a cyclone is recirculated to the tubular collecting part, that is, even if the collecting efficiency somewhat decreases in the collecting portion so that PM particulates are left, the whole exhaust gas from the collecting portion is recirculated without being exhausted to the outside, so that as the collecting portion, a small-sized and simple equipment or a simple control system can be adopted for the collecting portion.
(3) Even if a precipitation means with a high flow passage resistance is used, by installation of the blower, PM particulates can be not only recirculated to the introduction pipe smoothly but also an inflow tangential velocity into the cyclone or an inflow velocity into the impactor-type inertial particle separator, namely striking speeds of particulates to an impact plate can be controlled properly so that the collection efficiency can be improved in the collecting portion.
(4) By protruding the recirculation pipe into the introduction pipe (exhaust gas pipe) and opening the recirculation pipe toward the exhaust gas outflow direction, a recirculating flow which has been imparted with kinetic energy by the blower and has been increased in pressure/increased in velocity can be jetted in the flow direction of the exhaust gas, thereby causing an ejector effect to exhibit, and by sucking an exhaust gas flow flowing on the upstream side of the introduction pipe to increase the velocity of the exhaust gas flow to reduce an exhaust gas resistance, an engine efficiency/a fuel consumption rate can be improved.
(5) By arranging the recirculation pipe at an acute angle (15° ≤ θ ≥ 60°) to the introduction pipe (exhaust gas pipe) to open the recirculation pipe, a recirculating flow which has been imparted with kinetic energy by the blower and has been increased in pressure/increased in velocity is inclined and jetted such that a velocity component thereof along the flow direction of the exhaust gas is increased, thereby causing an ejector effect to exhibit, and by sucking an exhaust gas flow flowing on the upstream side of the introduction pipe to increase the velocity of the exhaust gas flow to reduce an exhaust gas resistance, an engine efficiency/a fuel consumption rate can be improved.
(6) When the recirculating flow is returned to the upstream side of the gas cooler, gas whose temperature has been lowered is mixed in the recirculating flow due to passage of the recirculating flow through the collecting portion/the recirculation pipe such as the collecting pipe/the cyclone or the impactor-type inertial particle separator, so that the temperature of inflow gas into the gas cooler is lowered and the flow velocity is increased due to increase of the gas flow rate passing through the gas cooler, heat transfer characteristic on a heat transfer face is improved, a heat exchange amount is increased, the temperature of the exhaust gas flowing out of the gas cooler is lowered and the temperature of gas flowing in the discharging portion is lowered, whereby PM which is noxious particulate matter mainly composed of ISF component such as carbon or sulfate and SOF component contained in the exhaust gas can be removed more efficiently, which can result in achievement/maintaining of the clarifying ratio in a high level.
(7) When the recirculating flow is returned to the downstream side of the gas cooler, increase of the gas flow passing through the gas cooler does not occurs, so that a small-sized gas cooler corresponding to a small flow rate can be used as compared with the case where the recirculating flow is returned to the upstream side of the gas cooler and the equipment can be made small and inexpensive.
(8) By branching a downstream flow from the collecting portion such as the cyclone or the impactor-type inertial particle separator as EGR gas to pressure-feed/ recirculate the EGR gas to the upstream side of the intake piping, a combustion temperature is lowered to suppress generation of NOx and reduce heat loss from a combustion chamber surface, which can result in improvement of the fuel consumption rate.
(9) By installing the blower in the recirculation pipe on the upstream side of the EGR gas branching portion, the velocity increase/adjustment of the inflow velocity into the collecting portion such as the cyclone or the impactor-type inertial particle separator for increasing the collection efficiency by one blower, and the recirculating flow into the collecting pipe as well as the pressure feeding of EGR gas into the intake pipe can be simultaneously performed, which can result in size reduction/weight reduction/cost reduction of the equipment.
(10) By installing the EGR cooler in the EGR pipe, the temperature of the EGR gas is further lowered, so that various operations/effects such as lowering of the intake temperature and the securing of a high EGR rate can be obtained.
(11) By installing the steam separator downstream of the exhaust gas cooling portion, it is made possible to preliminarily separate and remove condensed water which has been suspended with steam, SOF component, sulfate component, carbon and the like which have been occurred due to the combustion from the exhaust gas which has passed through the gas cooling portion, so that purification of the exhaust gas from the equipment of the present invention and reduction of apprehension to corrosion of the equipment, and reduction of load on the scrubber in the EGR specification can be achieved.
(12) By installing the scrubber in the EGR pipe and installing the steam separator downstream of the scrubber, the remaining components such as sulfur dioxide gas, PM (soot, SOF, sulfate) and the like which have not been collected/removed in the precipitation means are removed effectively, the content of the remaining components is further decreased and the EGR gas is further purified, the temperature of the branched EGR gas can be further lowered, corrosion of engine constituent parts due to SOF or sulfate is prevented effectively, and the fuel consumption rate can be improved by lowering the combustion temperature to suppress occurrence of NOx and reducing heat loss from the combustion chamber surface.

### Brief Description of Drawings

Figure 1 is a schematic vertically-sectional view showing an entire configuration of a first example equipment of the present invention;
Figure 2 is a schematic vertically-sectional view showing an entire configuration of a second example equipment of the present invention;
Figure 3 is a schematic vertically-sectional view showing a main section of a third example equipment of the present invention in an enlarged fashion;
Figure 4 is a schematic vertically-sectional view showing a main section of a fourth example equipment of the present invention in an enlarged fashion;
Figure 5 is a schematic vertically-sectional view showing one example of a conventional exhaust gas treatment equipment for a diesel engine;
Figure 6 is a schematic vertically-sectional view showing one example of a conventional exhaust gas treatment equipment for a diesel engine;
Figure 7 is a schematic vertically-sectional view showing one example of a conventional exhaust gas treatment equipment for a diesel engine;
Figure 8 is a schematic vertically-sectional view showing one example of a conventional exhaust gas treatment equipment for a diesel engine;
Figure 9 is a schematic vertically-sectional view showing one example of a conventional exhaust gas treatment equipment for a diesel engine;
Figure 10 is a partially-enlarged sectional view of the exhaust gas treatment equipment for a diesel engine shown in Figure 9;
Figure 11 is a schematic vertically-sectional view showing one example of a conventional exhaust gas treatment equipment for a diesel engine;

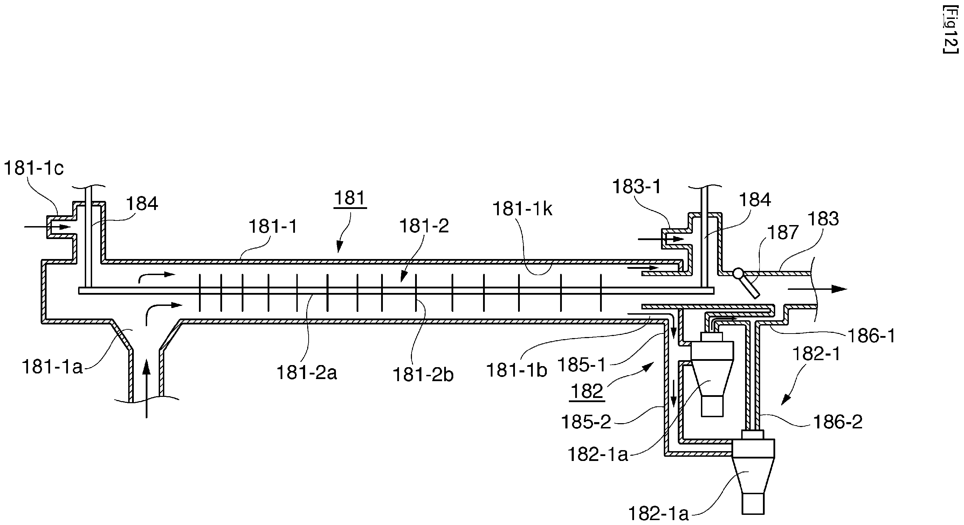

Figure 12 a schematic vertically-sectional view of another example of the conventional exhaust gas treatment equipment for a diesel engine shown in Figure 11; and

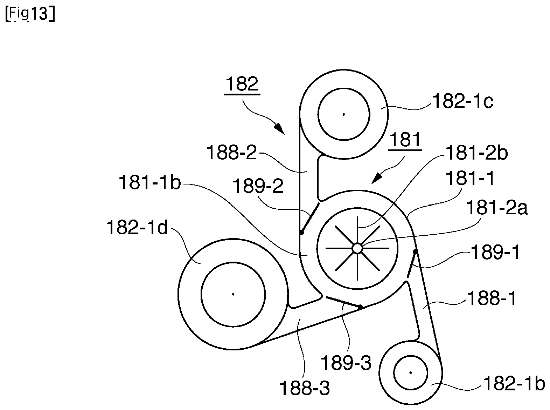

Figure 13 is an explanation view for schematically showing another example of a cyclone collecting means in the conventional exhaust gas treatment equipments for a diesel engine shown in Figure 11 and Figure 12.

### Description of Embodiments

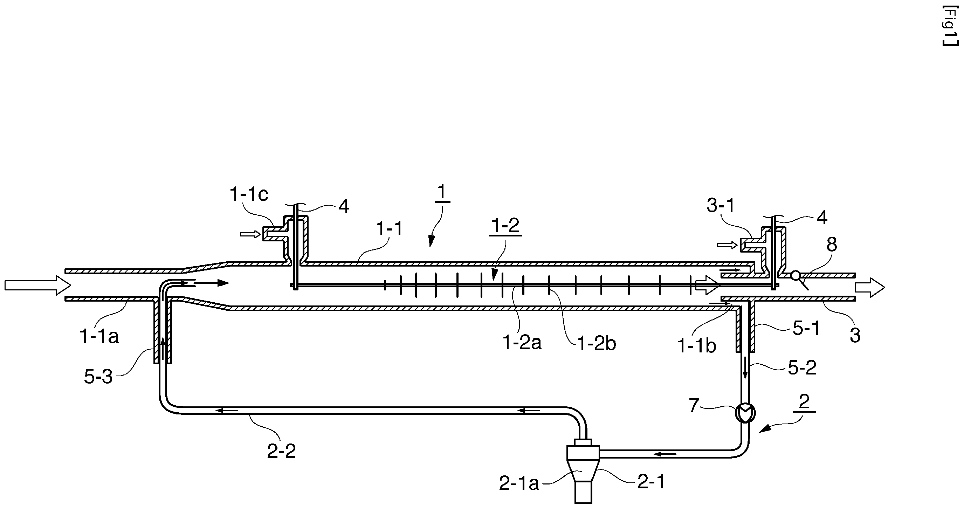

A first example equipment of the present invention shown in Figure 1 exemplifies an exhaust gas treatment equipment for a diesel engine of a recirculation system using a cyclone. The exhaust gas treatment equipment for a marine diesel engine includes a tubular collecting part constituting a discharging electrode for charging particulate matter contained in exhaust gas of a marine diesel engine using lower-grade fuel than fuel oil and a precipitation electrode for collecting the charged particulate matter, and further includes a separation and collection means of a cyclone system for separating the particulate matter detached from the tubular collecting part to collect separated particulate matter, and the exhaust gas treatment equipment adopts a system where a cyclone collecting means composed of a tangential cyclone is provided in a pipe from an exhaust gas delivery portion for particulate matter of high concentration provided in the vicinity of an inner circumferential face on the downstream side of the tubular collecting part, so that a PM high-concentration exhaust gas flow exhausted from the exhaust gas delivery portion for high-PM-concentration is introduced into the tangential cyclone to collect/treat large-diameter particulates and exhaust gas flow containing fine-diameter particulates which have not been removed by the same cyclone is increased in pressure/increased in velocity to be pressure-fed/recirculated to an introduction pipe (exhaust gas pipe) via a recirculation pipe by imparting kinetic energy to the exhaust gas flow by a blower to raise the pressure of the exhaust gas flow/increase the velocity thereof.

The exhaust gas treatment equipment for a diesel engine of a recirculation system using a cyclone is roughly composed of an electrical precipitation part 1 and a separation and collection means of a cyclone system 2, and the electrical precipitation part 1 for collecting PM particulates is provided with a collecting pipe 1-1 with a predetermined length constituting a precipitation electrode and a discharging electrode 1-2 charging PM contained in exhaust gas. In the collecting pipe 1-1 constituting the precipitation electrode, an end portion thereof on an upstream side (diesel engine side) has an exhaust gas introduction pipe (exhaust gas pipe) 1-1a, and a PM low-concentration exhaust gas delivery pipe 3 and a PM high-concentration exhaust gas delivery portion 1-1b are continuously provided in the vicinity of an axial center of an end portion on a downstream side and in the vicinity of an inner circumferential face of the end portion on the downstream side, respectively. The discharging electrode 1-2 is composed of a main electrode 1-2a extending over an almost entire length of the collecting pipe 1-1 in the vicinity of the axial center of the collecting pipe 1-1 constituting the precipitation electrode and a group of electrode needles 1-2b projecting radially and arranged at predetermined intervals in a longitudinal direction of the main electrode 1-2a. In the discharging electrode 1-2 thus configured, both end portions of the main electrode 1-2a are supported through supports 4 provided in a seal air introduction pipe portion 1-1c provided on the side of the exhaust gas introduction pipe portion 1-1a of the collecting pipe 1-1 and provided in a seal air introduction pipe portion 3-1 provided in an inlet region of a PM low-concentration exhaust gas delivery pipe 3 in a suspending manner. It should be noted that the discharging electrode 1-2 is supported with a predetermined spacing from the collecting pipe 1-1 by a stay insulated from inside of the collecting pipe 1-1 according to necessity. Further, the discharging electrode 1-2 is wired to a high-voltage power source equipment (not shown), which is placed outside, to receive a supply of a controlled high-voltage power source therefrom.

The separation and collection means 2 of a cyclone system provided between the upstream side and the downstream side of the electrical precipitation part 1 in a flow direction of the exhaust gas is composed of a cyclone collecting portion 2-1 serving as a separating means and a recirculation pipe 2-2 extending from the cyclone collecting portion 2-1. The cyclone collecting portion 2-1 is composed of a tangential cyclone 2-1a connected to the PM high-concentration exhaust gas delivery portion 1-1b provided in the vicinity of the inner circumferential face on the downstream side of the collecting pipe 1-1 of the electrical precipitation part 1 through a communication pipe 5-1 and a PM high-concentration exhaust gas pipe 5-2, and a recirculation pipe 2-2 and a communication pipe 5-3 for joining purified gas which has passed through the tangential cyclone 2-1a to exhaust gas flowing in the exhaust gas introduction pipe 1-1a are further arranged between the tangential cyclone 2-1a and the exhaust gas introduction pipe 1-1a on the upstream side of the collecting pipe 1-1 of the electrical precipitation part 1.

Further, a blower 7 is provided in the PM high-concentration exhaust gas pipe 5-2 between the communication pipe 5-1 and the tangential cyclone 2-1a. The blower 7 is provided in order to impart kinetic energy to exhaust gas flow to pressure-raising/velocity-increase the same, thereby improving a collection efficiency in the tangential cyclone 2-1a and securely pressure-feeding/recirculating exhaust gas flow containing fine diameter particulates which have not been removed in the tangential cyclone 2-1a to the exhaust gas pipe 1-1a through the recirculation pipe 2-2. Further, it should be noted that, though not illustrated, the blower 7 may be provided in the recirculation pipe 2-2. Further, though not illustrated, instead of the blower 7 provided in the PM high-concentration exhaust gas pipe 5-2 or the recirculation pipe 2-2,the kinetic energy can be imparted to the exhaust gas flow by providing a high-pressure gas jetting nozzle to jet high-pressure gas. Further, a flow rate control damper 8 for adjusting an inflow amount and an inflow velocity of a PM high-concentration exhaust gas into the tangential cyclone 2-1a and a flow rate of a discharge amount of PM low-concentration exhaust gas is provided in the low-PM-concentration exhaust gas delivery pipe 3.

In the exhaust gas treatment equipment for a marine diesel engine using fuel lower in quality than fuel oil, which is shown in the above Figure 1, since PM in the exhaust gas which has flowed in the collecting pipe 1-1 from the exhaust gas introduction pipe 1-1a is charged by discharging between an inner wall of the collecting pipe 1-1 constituting the precipitation electrode and the discharging electrode 1-2, the charged PM particulates are collected on the inner wall of the collecting pipe 1-1 by Coulomb's force. PM particulates collected from the gas flow in the vicinity of the axial center are further accumulated on the PM particulates collected on the inner circumferential wall of the collecting pipe 1-1 to gradually form a mass according to time elapsing, so that the PM mass flows in the vicinity of the inner wall of the collecting pipe while the PM mass repeats detachment due to the exhaust gas flow and reattachment on the tubular collecting wall due to Coulomb's force accompanied by discharging (charging) to be concentrated, whereby the exhaust gas flow containing PM in a high concentration is formed and simultaneously therewith, PM in exhaust gas flow flowing in the vicinity of the almost axial center of the collecting pipe 1-1 is collected on the inner wall of the collecting pipe and the exhaust gas flow is gradually diluted to form an exhaust gas flow containing PM only in a low concentration, which flows downstream. That is, exhaust gas flowing from the exhaust gas introduction pipe 1-1a into the collection pipe 1-1 is separated into a PM high-concentration exhaust gas flow and a PM low-concentration exhaust gas flow in the course of flowing in the electrical precipitation part 1 downstream, the PM high-concentration exhaust gas flow and the PM low-concentration exhaust gas flow in a state separated from each other flow downstream of the collecting pipe 1-1 in the vicinity of the inner wall of the collecting pipe and in the vicinity of the almost axial center of the collecting pipe 1-1, respectively. The PM high-concentration exhaust gas flow flowing in the vicinity of the inner wall of the collecting pipe is introduced from the PM high-concentration exhaust gas delivery portion 1-1b of the collecting pipe 1-1 into the tangential cyclone 2-1a through the communication pipe 5-1 and the high-concentration exhaust gas pipe 5-2, so that the large-diameter PM particulates are centrifuged. After the large-diameter PM particulates are collected in the tangential cyclone 2-1a, a roughly-purified exhaust gas flow containing fine-diameter PM particulates which have not been removed in the same tangential cyclone 2-1a flows in the recirculation pipe 2-2 to join with the exhaust gas flow flowing in the exhaust gas introduction pipe 1-1a through the communication pipe 5-3 on the upstream side, and at this time, the purified exhaust gas flow containing fine-diameter PM particulates is pressure-fed/recirculated to the exhaust gas introduction pipe 1-1a via the recirculation pipe 2-2 by imparting kinetic energy to the exhaust gas flow containing fine-diameter PM particulates by the blower 7 to increase the pressure of the exhaust gas flow/increase the velocity thereof.

According to the exhaust gas treatment equipment for a marine diesel engine using lower-grade fuel than fuel oil, which is shown in the above Figure 1, operations/effects described below will be achieved.
(a) It is possible to recirculate/pressure-feed/mix an exhaust gas flow (recirculated gas) containing fine-diameter particulates which has passed through the cyclone 2-1a to exhaust gas flow from the engine, repeat a cycle of discharging, charging of particulates, adhesion of the particulates to the inner wall face of the collecting pipe, and detachment of the particle to form large-diameter particulates in the collecting pipe 1-1, separate gas containing the large-diameter particulates as the PM high-concentration exhaust gas flow and remove the large-diameter particulates in the cyclone 2-1a securely.
(b) By recirculating the exhaust gas after passing through the cyclone 2-1a, while the collection efficiency of PM or the like in gas to be exhausted is maintained or improved, namely, the purifying degree of the PM low-concentration exhaust gas is maintained or improved, the entire equipment can be made small/compact and the control on the equipment is made simple, a control software/equipment is made simple, and an inexpensive and reliable equipment can be obtained without installing a plurality of tangential cyclones different in throughput so as to accommodate an exhaust gas flow rate changing in response to a change of an operation situation or a load factor of a marine engine accompanied by a parallel operation or a single operation of a main machine and an auxiliary machine of the marine engine.
(c) By installing the blower 7, even if a flow passage resistance of an exhaust gas flow of the tangential cyclone 2-1a is somewhat large, the purified exhaust gas flow containing fine-diameter PM particulates can be not only smoothly recirculated to the exhaust gas introduction pipe 1-1a but also an inflow tangential velocity to the tangential cyclone 2-1a can be controlled properly and the collection efficiency in the same cyclone is also raised. It should be noted that an installation position of the blower 7 may be either in front of or behind the cyclone, and when the blower installation position is on the upstream side of the cyclone, it is easy to obtain a high collection efficiency while the inflow tangential velocity into the cyclone is kept high, and on the other hand, when the blower installation position is on the downstream side of the cyclone, the suction resistance of the blower 7 is large and surging is somewhat apprehended, but since adhesion of PM particulates or the like to a fan blade surface is reduced and the temperature of gas is lowered, the durability of the blower 7 can be secured easily.
(d) By causing the recirculation pipe to project into the exhaust gas introduction pipe 1-1a as shown in Figure 1, bending a distal end opening of the recirculation pipe toward an exhaust gas outflow direction, jetting a recirculating flow imparted with kinetic energy by the blower 7 to be pressure-increased/velocity-increased, exhibiting an ejector effect, and sucking the exhaust gas flow flowing through the exhaust gas introduction pipe 1-1a to decrease an exhaust gas resistance, rising of the engine efficiency can be achieved.

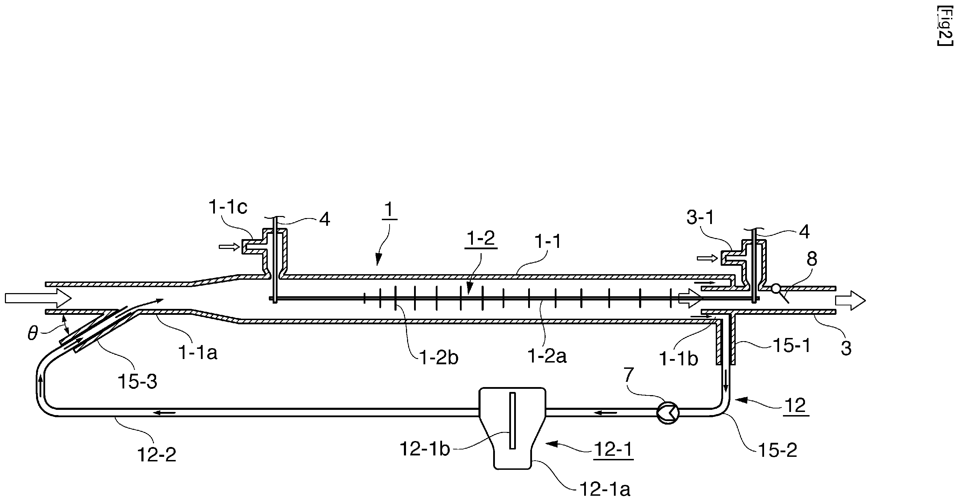

A second example equipment of the present invention shown in Figure 2 exemplifies an exhaust gas treatment equipment for a marine diesel engine of a recirculation system using an impactor-type inertial particle separator, which has a configuration approximately similar to the first example equipment except that the impactor-type inertial particle separator is used as the collecting means for large-diameter particulates.

That is, the second example equipment shown in Figure 2 is an exhaust gas treatment equipment for a marine diesel engine having a tubular collecting part constituting a discharging electrode for charging particulate matter contained in exhaust gas of a marine diesel engine using lower-grade fuel than fuel oil and a precipitation electrode for collecting the charged particulate matter, and provided with a means for separating the particulate matter detached from the tubular collecting part to collect separated particulate matter, which adopts a system where a collecting means constituted of an impactor-type inertial particle separator composed of a container and an impact plate is provided in a pipe from a high-concentration exhaust gas delivery portion for particulate matter provided in the vicinity of an inner circumferential face on the downstream side of the tubular collecting part, so that a PM high-concentration exhaust gas flow exhausted from the PM high-concentration exhaust gas delivery portion is introduced into the impactor-type inertial particle separator to collect/treat large-diameter particulates and exhaust gas flow containing fine-diameter particulates which have not been removed by the same impactor-type inertial particle separator is increased in pressure/increased in velocity to be pressure-fed/recirculated to an introduction pipe (exhaust gas pipe) via a recirculation pipe by imparting kinetic energy to the exhaust gas flow by a blower to increase the pressure of the exhaust gas flow/increase the speed thereof.

In the second example equipment of the present invention shown in Figure 2, a separation and collection means 12 provided between the upstream side and the downstream side of the electrical precipitation part 1 in the flow direction of the exhaust gas is composed of a separation and collection means 12-1 of an impactor-type inertial particle separator system and a recirculation pipe 12-2 from the separation and collection means 12-1. The separation and collection means 12-1 of an impactor-type inertial particle separator system is composed of an impactor-type inertial particle separator 12-1a connected to the PM high-concentration exhaust gas introduction portion 1-1b provided in the vicinity of the inner circumferential face of the collection pipe 1-1 of the electrical precipitation part 1 on the downstream side through a communication pipe 15-1 and a PM high-concentration exhaust gas pipe 15-2, and a recirculation pipe 12-2 and a communication pipe 15-3 for joining purified gas after passing through the impactor-type inertial particle separator 12-1a to exhaust gas flowing in the exhaust gas introduction pipe 1-1a are further arranged between the impactor-type inertial particle separator 12-1a and the exhaust gas introduction pipe 1-1a on the upstream side of the collecting pipe 1-1 of the electrical precipitation part 1. The impactor-type inertial particle separator 12-1a has therein an impact plate 12-1b which causes PM particulates and the like to separate and drop from exhaust gas to be removed through collision of the exhaust gas against the impact plate. It should be noted that the communication pipe 15-3 is provided so as to be inclined to the exhaust gas introduction pipe 1-1a by a gas inflow angle θ of 15° to 60°. This is because an ejector effect is exhibited by jetting a recirculating flow imparted with kinetic energy by the blower 7 installed in the PM high-concentration exhaust gas pipe 15-2 to be pressure-increased/speed-increased in an inclination fashion. Here, the reason why the gas inflow angle θ is set in a range from 15° to 60° is because if the gas inflow angle θ is less than 15°, an axial direction length of a piping part constituting a joining portion along the collecting pipe 1-1 becomes long, which results in size enlargement of the equipment, and on the other hand, if the gas inflow angle θ is more than 60°, the ejector effect cannot be achieved sufficiently.

According to the exhaust gas treatment equipment for a marine diesel engine using lower-grade fuel than fuel oil, which is shown in the above Figure 2, operations/effects described below will be achieved.
(a) It is possible to recirculate/pressure-feed/mix an exhaust gas flow (recirculated gas) containing fine-diameter particulates after passing through the impactor-type inertial particle separator 12-1a to exhaust gas flow from the engine, repeat a cycle of discharging, charging of particulates, adhesion of the particulates to the inner wall face of the collecting pipe, and detachment of the particle to form large-diameter particulates in the collecting pipe 1-1, separate gas containing the large-diameter particulates as the PM high-concentration exhaust gas flow and remove the large-diameter particulates in the impactor-type inertial particle separator 12-1a securely.
(b) By recirculating the exhaust gas after passing through the impactor-type inertial particle separator 12-1a, while the collection efficiency of PM or the like in exhaust gas to be exhausted is maintained or improved, namely, the purifying degree of the PM low-concentration exhaust gas is maintained or improved, the entire equipment can be made small/compact and the control on the equipment is made simple, a control software/equipment is made simple, and an inexpensive and reliable equipment can be obtained without installing a plurality of impactor-type inertial particle separators different in throughput, respectively, so as to accommodate an exhaust gas flow rate changing in response to a change of an operation situation or a load factor of a marine engine accompanied by a parallel operation or a single operation of a main machine and an auxiliary machine of the marine engine.
(c) By installing the blower 7, even if a flow passage resistance of an exhaust gas flow of the impactor-type inertial particle separator 12-1a is somewhat large, purified exhaust gas flow containing fine-diameter PM particulates can be not only smoothly recirculated to the exhaust gas introduction pipe 1-1a but also an inflow velocity to the impactor-type inertial particle separator 12-1a, namely, an impact velocity of particulates to the impact plate 12-1b can be controlled properly and the collection efficiency in the impactor-type inertial particle separator 12-1a is also raised. It should be noted that an installation position of the blower 7 may be either in front of or behind the impactor-type inertial particle separator 12-1a, and when the blower installation position is on the upstream side of the impactor-type inertial particle separator, it is easy to obtain a high collection efficiency while the impact velocity of particulates to impact plate is kept high, and on the other hand, when the blower installation position is on the downstream side of the impactor-type inertial particle separator, the suction resistance of the blower 7 is large and surging is somewhat apprehended, but since adhesion of PM particulates or the like to a fan blade surface is reduced and the temperature of gas is lowered, the durability of the blower 7 can be secured easily.
(d) Rising of the engine efficiency can be achieved by setting the inclination angle θ (gas inflow angle) of the recirculation pipe (communication pipe 15-3) to 15° to 60° to the exhaust gas introduction pipe 1-1a, as shown in Figure 2, jetting a recirculating flow imparted with kinetic energy by the blower 7 and pressure-increased/speed-increased, exhibiting an ejector effect, and sucking the exhaust gas flow flowing through the exhaust gas introduction pipe 1-1a to decrease an exhaust gas resistance.

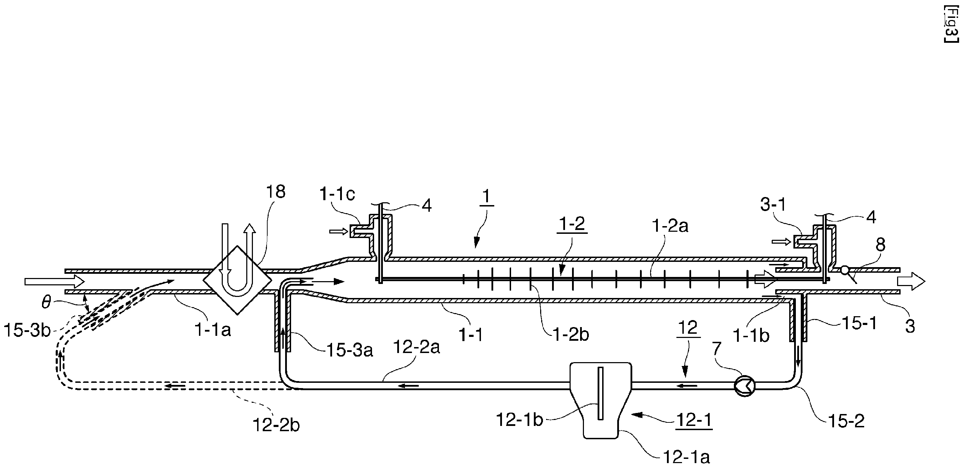

A third example equipment of the present invention shown in Figure 3 shows another example of the exhaust gas treatment equipment for a marine diesel engine of a recirculation system using an impactor-type inertial particle separator, shown in the above Figure 2, which has a configuration approximately similar to the second example equipment except that a gas cooler is arranged on the upstream side of the tubular collecting part and a recirculation pipe is configured so be opened upstream or downstream of the gas cooler.

That is, the third example equipment of the present invention shown in Figure 3 is an exhaust gas treatment equipment for a marine diesel engine having a tubular collecting part constituting a discharging electrode for charging particulate matter contained in exhaust gas of a marine diesel engine using fuel lower in quality than fuel oil and a precipitation electrode for collecting the charged particulate matter, and provided with a means for separating the particulate matter detached from the tubular collecting part to collect separated particulate matter, which adopts a system where a collecting means constituted of an impactor-type inertial particle separator composed of a container and an impact plate is provided in a pipe from a PM high-concentration exhaust gas delivery portion for particulate matter provided in the vicinity of an inner circumferential face on the downstream side of the tubular collecting part, so that a PM high-concentration exhaust gas flow exhausted from the PM high-concentration exhaust gas delivery portion is introduced into the impactor-type inertial particle separator to collect/treat large-diameter particulates and an exhaust gas flow containing fine-diameter particulates which have not been removed by the same impactor-type inertial particle separator is increased in pressure/increased in velocity to be pressure-fed/recirculated to an introduction pipe (exhaust gas pipe) via a recirculation pipe by imparting kinetic energy to the exhaust gas flow by a blower to increase the pressure of the exhaust gas flow/increase the speed thereof, wherein a gas cooler is arranged on the upstream side of the tubular collecting part, and the recirculation pipe is opened toward the upstream or downstream of the gas cooler, so that purified gas after large-diameter particulates are collected by the impactor-type inertial particle separator is recirculated to the exhaust gas introduction pipe.

The third example equipment of the present invention shown in Figure 3 adopts a configuration where a separation and collection means 12 provided between an upstream side and a downstream side of the electrical precipitation part 1 in the flow direction of the exhaust gas is composed of a separation and collection means 12-1 of an impactor-type inertial particle separator system and a recirculation pipe 12-2a extending from the separation and collection means 12-1, and a gas cooler (exhaust gas cooler) 18 for lowering the temperature of exhaust gas is arranged on the upstream side of the electrical precipitation part 1. Like the exhaust gas treatment equipment for a marine diesel engine of a recirculation system using the impactor-type inertial particle separator, which is shown in Figure 2, the separation and collection means 12-1 of an impactor-type inertial particle separator system is composed of an impactor-type inertial particle separator 12-1a connected to the PM high-concentration exhaust gas introduction portion 1-1b provided in the vicinity of the inner circumferential face of the collection pipe 1-1 of the electrical precipitation part 1 on the downstream side through the communication pipe 15-1 and the PM high-concentration exhaust gas pipe 15-2, and a recirculation pipes 12-2a, 12-2b and communication pipes 15-3a, 15-3b for joining roughly purified exhaust gas after passing through the impactor-type inertial particle separator 12-1a to exhaust gas flowing in the exhaust gas introduction pipe 1-1a are further arranged between the impactor-type inertial particle separator 12-1a and the exhaust gas introduction pipe 1-1a on the upstream side of the collecting pipe 1-1 of the electrical precipitation part 1. The impactor-type inertial particle separator 12-1a has therein an impact plate 12-1b which causes PM particulates and the like to separate and drop from exhaust gas to be removed through collision of the exhaust gas against the impact plate. It should be noted that the communication pipe 15-3b is provided so as to be inclined to the exhaust gas introduction pipe 1-1a by a gas inflow angle θ of 15° to 60° in order to exhibit an ejector effect like the second example equipment.

The gas cooler (exhaust gas cooler) 18 provided on the upstream side of the electrical precipitation part 1 in order to lower the temperature of the exhaust gas is installed in the exhaust gas introduction pipe 1-1a and the recirculation pipes 12-2a, 12-2b and the communication pipes 15-3a, 15-3b are arranged upstream or downstream of the gas cooler 18, respectively, as illustrated in Figure. From such a fact that when the temperature of the whole exhaust gas is lowered prior to introduction of exhaust gas into the electrical precipitation part 1, condensation of the SOF component and the sulfate component is facilitated, it is well known that the collection efficiency of the SOF component and the sulfate component in exhaust gas is improved. In this example equipment, this technique is adopted in the exhaust gas treatment equipment for a marine diesel engine of a recirculation system using an impactor-type inertial particle separator. It should be noted that as a method for lowering the temperature of exhaust gas, there are a method where in a ship, for example, a heat exchanging equipment such as an existing recuperator is provided as the exhaust gas cooler or a spraying equipment for water or sea water is installed, where water drops are evaporated while they are being condensed, and the temperature of the exhaust gas is lowered by taking evaporation heat at the evaporating time, and the like.

According to the exhaust gas treatment equipment for a marine diesel engine using fuel lower in quality than fuel oil, which is shown in the above Figure 3, operations/effects described below will be achieved.
(a) When exhaust gas flow (recirculated gas) containing fine-diameter particulates after passing through the impactor-type inertial particle separator 12-1a is recirculated to the upstream side of the gas cooler 18, the exhaust gas flow (recirculated gas) passes through the collecting pipe/the impactor-type inertial particle separator/the recirculation pipe and the like, so that exhaust gas with a lowered temperature forms a mixed flow, which results in lowering of the inflow gas temperature into the gas cooler (exhaust gas cooler) 18, and a flow velocity is increased due to increase of a gas flow rate passing through the gas cooler 18, a heat transfer characteristic on a heat transfer face is improved, a heat exchange amount is increased, the temperature of exhaust gas flowing out of the gas cooler 18 is lowered, and the temperature of gas flowing in the discharging section is lowered, so that PM which is noxious particulate matter mainly composed of the ISF component such as carbon and sulfate and the SOF component which are contained in exhaust gas can be removed more efficiently and the purifying ratio of exhaust gas can be achieved at a high level.
(b) When exhaust gas (recirculated gas) containing fine-diameter particulates after passing through the impactor-type inertial particle separator 12-1a is recirculated to the downstream side of the gas cooler 18, the gas flow rate passing through the gas cooler 18 is not increased, so that it becomes possible to use a small-sized gas cooler accommodating a small flow rate, which results in size reduction and low price of an equipment.

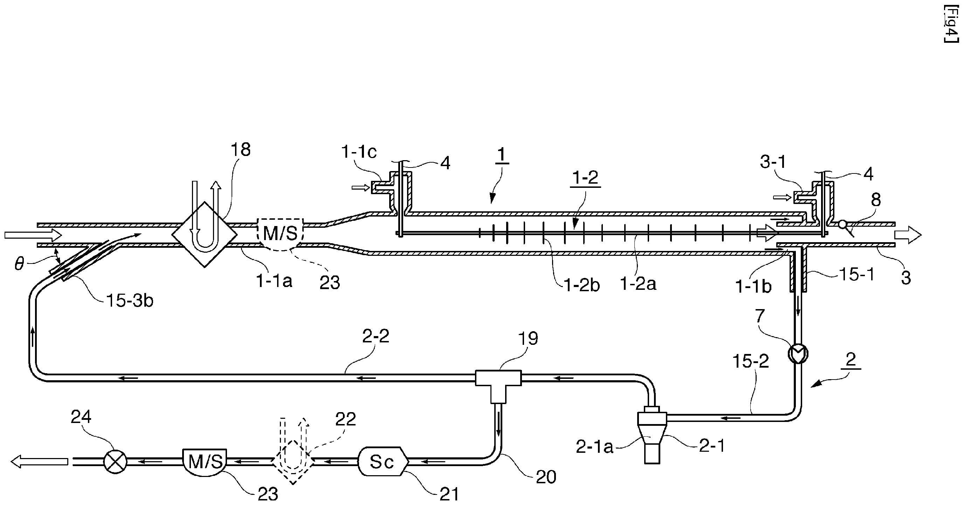

A fourth example equipment of the present invention shown in Figure 4 adopts a system where the gas cooling system of the above-described third example equipment is incorporated in the same exhaust gas treatment equipment for a diesel engine of a recirculation system using a cyclone as the first example equipment shown in the above Figure 1 and a system where an exhaust gas flow purified by the separation and collection means of a cyclone system is pressure-fed/recirculated to the intake pipe as EGR gas is additionally provided, so that the recirculating flow to the exhaust gas introduction pipe and EGR pressure feeding are performed by one blower.

That is, the fourth example equipment of the present invention shown in Figure 4 is an exhaust gas treatment equipment for a marine diesel engine having a tubular collecting part constituting a discharging electrode for charging particulate matter contained in exhaust gas of a marine diesel engine using fuel lower in quality than fuel oil and a precipitation electrode for collecting the charged particulate matter, and provided with a means for separating the particulate matter detached from the tubular collecting part to collect separated particulate matter, which adopts a system where the blower 7 is provided in a pipe from a high-concentration exhaust gas delivery portion for particulate matter provided in the vicinity of an inner circumferential face on the downstream side of the tubular collecting part to constitute a PM high-concentration exhaust gas pipe 15-2 and a cyclone collecting means composed of a tangential cyclone is further provided in the PM high-concentration exhaust gas pipe, so that a PM high-concentration exhaust gas flow exhausted from the PM high-concentration exhaust gas delivery portion is introduced into the tangential cyclone to collect/treat large-diameter particulates and an exhaust gas flow containing fine-diameter particulates which has not been removed by the same cyclone is increased in pressure/increased in velocity to be pressure-fed/recirculated to an introduction pipe (exhaust gas pipe) via a recirculation pipe by imparting kinetic energy to the exhaust gas flow by a blower to increase the pressure of the exhaust gas flow/increase the speed thereof, a system where a gas cooler (exhaust gas cooler) is arranged on the upstream side of the tubular collecting part, a recirculation pipe is opened on the upstream side of the gas cooler, and purified gas after large-diameter particulates are collected by the tangential cyclone is recirculated to the exhaust gas introduction pipe, and a system where an EGR pipe is further connected to the recirculation pipe on the outlet side of the tangential cyclone in a branching fashion, and the purified gas after the collection is branched as EGR gas, and recirculating flow to the exhaust gas introduction pipe and pressure feeding/recirculating flow of the EGR gas to the intake pipe are performed by one blower.

In explanation of a specific equipment configuration of the fourth example equipment with reference to Figure 4, such a configuration is adopted that an EGR pipe 20 branding portion of exhaust gas from a branching portion 19 provided in the recirculation pipe 2-2 extending from the cyclone collecting portion 2-1 is connected in a branching fashion, preferably a scrubber 21 and a steam separator 23 are arranged in the EGR pipe 20, so that remaining components such as PM, soot, SOF, and sulfate, which have not been removed in the tangential cyclone 2-1a of the cyclone collecting portion 2-1, are removed, whereby cleaner EGR gas is pressure-fed/recirculated to the intake pipe while a flow rate thereof is being controlled by an EGR valve 24. Reference numeral 22 denotes an EGR cooler. On the other hand, like the above, a gas cooler (exhaust gas cooler) 18 for lowering the temperature of exhaust gas and preferably a steam separator 23 are arranged on the upstream side of the electrical precipitation part 1, and a recirculation pipe 2-2 and a communication pipe 15-3b for joining purified gas after passing through the tangential cyclone 2-1a of the cyclone collecting portion 2-1 to exhaust gas flowing in the exhaust gas introduction pipe 1-1a is disposed in the exhaust gas introduction pipe 1-1a on the upstream side of the gas cooler 18. It should be noted that the communication pipe 15-3b is provided in order to exhibit the ejector effect such that a gas inflow angle θ thereof to the exhaust gas introduction pipe 1-1a is inclined to 15° to 60° like the above-described second example equipment.

According to the exhaust gas treatment equipment for a marine diesel engine using fuel lower in quality than fuel oil, which is shown in Figure 4, operations/effects described below will be achieved in addition to the operations/effects similar to those of the first example equipment shown in the above Figure 1.
(a) Portion of exhaust gas from the branching portion 19 provided in the recirculation pipe 2-2 is branched as EGR gas, preferably by removing remaining components such as PM, soot, SOF and sulfate which have not been removed in the cyclone collecting portion 2-1 by the scrubber 21 disposed in the EGR pipe 20, cleaner EGR gas can be pressure-fed/recirculated to the intake pipe while a flow rate thereof is being controlled by the EGR valve 24, and occurrence of NOx can be suppressed by lowering a combustion temperature.
(b) By installing the EGR cooler 22 in the EGR pipe 20, lowering of an intake temperature due to further lowering the temperature of the EGR gas, securing of a high EGR rate, and the like can be made possible, so that various operations/effects such that it is made possible to lower the combustion temperature to suppress occurrence of NOx and reduce heat loss from the combustion chamber surface to improve a fuel consumption rate can be obtained.
(c) By installing the steam separator 23 downstream of the gas cooler (exhaust gas cooler) 18, it is made possible to preliminarily separate and remove water vapor and condensed water which has been suspended with SOF, carbon and the like which have been occurred due to the combustion from the exhaust gas which has passed through the gas cooler 18, so that apprehension to corrosion of the equipment can be reduced together with purification of exhaust gas.
(d) By arranging the steam separator 23 downstream of the scrubber 21 installed in the EGR pipe 20, the remaining components such as sulfur dioxide gas, PM (soot, SOF, sulfate) and the like which have not been removed in the cyclone collecting portion 2-1 are removed effectively, the content of the remaining components is further decreased and the EGR gas is further purified, the temperature of the branched EGR gas can be further lowered, corrosion of engine constituent parts due to SOF or sulfate is prevented effectively, and the fuel consumption rate can be improved by lowering the combustion temperature to suppress occurrence of NOx and reducing heat loss from the combustion chamber surface.

### Reference Signs List

1...electrical precipitation part,
1-1...collecting pipe,
1-1a...exhaust gas introduction pipe,
1-1b...PM high-concentration exhaust gas delivery portion,
1-1c...seal air introduction pipe portion
1-2...discharging electrode
1-2a...main electrode
1-2b...electrode needle
2, 12...separation and collection means
2-1... cyclone collecting portion
2-1a...tangential cyclone
2-2, 12-2, 12-2a, 12-2b...recirculation pipe
3...PM low-concentration exhaust gas delivery pipe
3-1... seal air introduction pipe portion
4...support
5-1, 5-3, 15-1, 15-3, 15-3a, 15-3b...communication pipe
5-2, 15-2...PM high-concentration exhaust gas pipe
7...blower
8...flow rate control damper
12... separation and collection means
12-1... separation and collection means of impactor-type inertial particle separator
12-1a...impactor-type inertial particle separator
12-1b...impact plate
18...gas cooler (exhaust gas cooler)
19...branching portion
20...EGR pipe
21...scrubber
22...EGR cooler
23...steam separator
24...EGR valve

## Claims

1. An exhaust gas treatment equipment for a large displacement marine diesel engine using lower-grade fuel than fuel oil, comprising:
- an electrical precipitation means (1) including a discharge electrode (1-2) for charging particulate matter contained in exhaust gas of a large displacement marine diesel engine using lower-grade fuel than fuel oil,
- and a tubular collecting part (1-1) with a predetermined length for constituting a precipitation electrode for collecting the charged particulate matter,
∘ the tubular collecting part (1-1) having an inner circumferential face and an axis,
∘ whereby an exhaust gas delivery pipe (3) for particulate matter of low concentration is provided in the vicinity of the axial center on a downstream side of the tubular collecting part (1-1),
∘ whereby an exhaust gas delivery portion (1-lb) for particulate matter of high concentration is provided in the vicinity of the inner circumferential face on the downstream side of the tubular collecting part (1-1),
- whereby the discharge electrode (1-2) being composed of a main electrode (1-2a) arranged in the tube axis direction of the tubular collecting part (1-1) and a plurality of electrode needles (1-2b), the electrode needles (1-2b) being disposed at intervals on the main electrode (1-2a) and projecting radially, and
- a precipitation means (2, 12) for separating and collecting the particulate matter detached from the tubular collecting part (1-1),
- whereby said precipitation means (2, 12) for collecting the particulate matter is provided to be continuous to the exhaust gas delivery portion (1-1b) for the particulate matter of high concentration, **characterized in that**
- a recirculation pipe (2-2, 12-2) for causing purified gas after passing through the precipitation means (2, 12) to recirculate is provided from the precipitation means (2, 12) to an exhaust gas introduction pipe (1-la) that is provided at an upstream end of the tubular collecting part (1-1),
- and a flow rate control damper (8) is provided in the low-PM-concentration exhaust gas delivery pipe (3),
- and a kinetic energy imparting means (7) to exhaust gas recirculating in the recirculation pipe (2-2, 12-2) is arranged
- so that an exhaust gas inflow velocity into the precipitation means (2, 12) is controlled by controlling an opening degree of the damper (8) arranged in the exhaust gas delivery pipe for particulate matter of low concentration (3) and/or a the kinetic energy imparting means(7) to the exhaust gas.

2. An exhaust gas treatment equipment according to claim 1, wherein the exhaust gas treatment equipment further comprises , on the recirculation pipe (2-2, 12-2), a branching portion (19) and an EGR pipe (20) and an EGR valve (24), the EGR pipe (20) and the EGR valve (24) being connected to the branching portion (19).

3. The exhaust gas treatment equipment according to claim 1 or 2, wherein the precipitation means (2) is a tangential cyclone (2-1).

4. The exhaust gas treatment equipment according to claim 1 or 2, wherein the precipitation means (12) is an impactor-type inertial particle separator (12-1).

5. The exhaust gas treatment equipment according to any one of claims 1 to 4, wherein an exhaust gas cooler (18) is provided upstream of the tubular collecting part (1-1), and a recirculation pipe (2-2, 12-2b) is arranged between an upstream part of the exhaust gas cooler (18) and the precipitation means (2, 12).

6. The exhaust gas treatment equipment according to any one of claims 1 to 5, wherein the kinetic energy imparting means (7) to exhaust gas recirculating in the recirculation pipe (2-2, 12-2) is configured by arranging a blower or a high-pressure gas jetting nozzle.

7. The exhaust gas treatment equipment according to any one of claims 1 to 6, wherein the recirculation pipe (2-2, 12-2) is arranged such that exhaust gas to be recirculated flows in the exhaust gas introduction pipe (1-la) at an inflow angle having an inclination angle (θ) of 15° to 60° to the exhaust gas introduction pipe (1-la).

8. The exhaust gas treatment equipment according to any one of claims 1 to 7, wherein the recirculation pipe (2-2, 12-2) projects into the exhaust gas introduction pipe (1-la) and is arranged to be opened toward an exhaust gas outflow direction.

9. The exhaust gas treatment equipment according to any one of claims 2 to 8, wherein a scrubber (21) for further purifying exhaust gas is provided on the EGR pipe (20).

10. The exhaust gas treatment equipment according to any one of claims 2 to 9, wherein an EGR cooler (22) for cooling EGR gas is provided on the EGR pipe (20).

11. The exhaust gas treatment equipment according to claim 10, wherein a steam separator (23) for separating and removing condensed water is arranged in the EGR pipe (20) and/or on the upstream side of the electrical precipitation part (1).

## Patentansprüche

1. Abgasbehandlungsvorrichtung für einen Marinedieselmotor mit großem Hubraum, der Kraftstoff von geringerer Qualität als Heizöl verwendet, umfassend:
- ein elektrisches Abscheidemittel (1), das eine Entladungselektrode (1-2) zum Laden von Partikelmaterie enthält, die in dem Abgas eines Marinedieselmotors mit großem Hubraum, der Kraftstoff von geringerer Qualität als Heizöl verwendet, enthalten ist
- und einen röhrenförmigen Sammelabschnitt (1-1) mit einer vorgegeben Länge, um die Abscheideelektrode zum Sammeln der geladenen Partikelmaterie darzustellen,
• wobei der röhrenförmige Sammelabschnitt (1-1) eine innere Umfangsfläche und eine Achse aufweist,
• wobei das Abgasabgaberohr (3) für die Partikelmaterie geringer Konzentration in der Nähe der axialen Mitte an der nachgelagerten Seite des röhrenförmigen Sammelabschnitts bereitgestellt ist (1-1),
• wobei der Abgasabgabeabschnitt (1-1b) für Partikelmaterie hoher Konzentration in der Nähe der inneren Umfangsfläche an der nachgelagerten Seite des röhrenförmigen Sammelabschnitts bereitgestellt ist (1-1),
- wobei die Entladungselektrode (1-2) aus einer Hauptelektrode (1-2a), die in der E-Rohrachsenrichtung des röhrenförmigen Sammelabschnitts (1-1) angeordnet ist, und mehreren Elektronennadeln (1-2b) besteht, wobei die Elektronennadeln (1-2b) in Intervallen an der Hauptelektrode (1-2a) angeordnet sind und radial vorspringen, und
- ein Abscheidemittel (2, 12) zum Abtrennen und Sammeln der Partikelmaterie, die von dem röhrenförmigen Sammelabschnitt (1-1) getrennt wird,
- wobei das Abscheidemittel (2, 12) zum Sammeln der Partikelmaterie bereitgestellt wird, um den Abgasabgabeabschnitt (1-1b) für die Partikelmaterie hoher Konzentration fortzusetzen, **dadurch gekennzeichnet, dass**
- ein Rezirkulationsrohr (2-2, 12-2), um das gereinigte Gas nach dem Durchlaufen des Abscheidemittels (2, 12) rezirkulieren zu lassen, von dem Abscheidemittel (2, 12) zu einem Abgaseinführungsrohr (1-1a) bereitgestellt wird, das an einem vorgelagerten Ende des röhrenförmigen Sammelabschnitts (1-1) bereitgestellt ist,
- und ein Durchflusssteuerdämpfer (8) in dem Abgasabgaberohr (3) mit niedriger-PM-Konzentration bereitgestellt ist,
- und ein kinetisches Energieübertragungsmittel (7) zum Rezirkulieren von Abgas in dem Rezirkulationsrohr (2-2, 12-2) angeordnet ist,
- sodass eine Abgaseinlaufgeschwindigkeit in das Abscheidemittel (2, 12) durch Steuerung eines Öffnungsgrads des Dämpfers (8), der in dem Abgasabgaberohr für die Partikelmaterie geringer Konzentration (3) und/oder dem kinetischen Energiezufuhrmittel (7) zu dem Abgas angeordnet ist, gesteuert wird.

2. Abgasbehandlungsvorrichtung nach Anspruch 1, wobei die Abgasbehandlungsvorrichtung ferner am Rezirkulationsrohr (2-2, 12-2) einen Zweigabschnitt (19) und ein EGR-Rohr (20) und ein EGR-Ventil (24) umfasst, wobei das EGR-Rohr (20) und das EGR-Ventil (24) mit dem Abzweigabschnitt (19) verbunden sind.

3. Abgasbehandlungsvorrichtung nach Anspruch 1 oder 2, wobei das Abscheidemittel (2) ein tangentialer Zyklon (2-1) ist.

4. Abgasbehandlungsvorrichtung nach Anspruch 1 oder 2, wobei das Abscheidemittel (12) ein Inertpartikelseparator (12-1) vom Aufpralltyp ist.

5. Abgasbehandlungsvorrichtung nach einem der Ansprüche 1 bis 4, wobei ein Abgaskühler (18) dem röhrenförmigen Sammelabschnitt (1-1) vorgelagert bereitgestellt ist und ein Rezirkulationsrohr (2-2, 12-2b) zwischen einem vorgelagerten Teil des Abgaskühlers (18) und dem Abscheidemittel (2, 12) angeordnet ist.

6. Abgasbehandlungsvorrichtung nach einem der Ansprüche 1 bis 5, wobei das kinetische Energiezufuhrmittel (7) für das Abgas, das in dem Rezirkulationsrohr (2-2, 12-2) rezirkuliert, durch Anordnung eines Gebläses oder einer Hochdruckgasstrahldüse konfiguriert ist.

7. Abgasbehandlungsvorrichtung nach einem der Ansprüche 1 bis 6, wobei das Rezirkulationsrohr (2-2, 12-2) so angeordnet ist, dass das Abgas, das rezirkuliert werden soll, mit einem Einlaufwinkel, der einen Neigungswinkel (θ) von 15° bis 60° zu dem Abgaseinführungsrohr (1-1a) aufweist, in das Gaseinführungsrohr (1-1a) fließt.

8. Abgasbehandlungsvorrichtung nach einem der Ansprüche 1 bis 7, wobei das Rezirkulationsrohr (2-2, 12-2) in das Abgaseinführungsrohr (1-1a) vorspringt und angeordnet ist, sich in Richtung einer Abgasauslassrichtung zu öffnen.

9. Abgasbehandlungsvorrichtung nach einem der Ansprüche 2 bis 8, wobei ein Schrubber (21) für die weitere Reinigung des Abgases am EGR-Rohr (20) bereitgestellt ist.

10. Abgasbehandlungsvorrichtung nach einem der Ansprüche 2 bis 9, wobei ein EGR-Kühler (22) zum Kühlen von EGR-Gas am EGR-Rohr (20) bereitgestellt ist.

11. Die Abgasbehandlungsvorrichtung nach Anspruch 10, wobei ein Dampftrenner (23) zum Abtrennen und Entfernen von kondensiertem Wasser in dem EGR-Rohr (20) und/oder an der vorgelagerten Seite des elektrischen Abscheideabschnitts (1) angeordnet ist.

## Revendications

1. Équipement de traitement de gaz d'échappement pour un moteur diesel marin à gros déplacement utilisant un carburant de qualité inférieure au mazout, comprenant :
- un moyen de précipitation électrique (1) comprenant une électrode de décharge (1-2) permettant de charger de la matière particulaire contenue dans un gaz d'échappement d'un moteur diesel marin à gros déplacement utilisant un carburant de qualité inférieure au mazout,
- et une partie de collecte tubulaire (1-1) d'une longueur prédéterminée permettant de constituer une électrode de précipitation destinée à la collecte de la matière particulaire chargée,
∘ la partie de collecte tubulaire (1-1) ayant une face circonférentielle interne et un axe,
∘ selon lequel un tuyau de décharge de gaz d'échappement (3) destiné à la matière particulaire de basse concentration est utilisé à proximité du centre axial sur un côté aval de la partie de collecte tubulaire (1-1),
∘ selon lequel une partie de décharge de gaz d'échappement (1-1b) destinée à la matière particulaire de haute concentration est utilisée à proximité de la face circonférentielle interne sur le côté aval de la partie de collecte tubulaire (1-1),
- selon lequel l'électrode de décharge (1-2) étant composée d'une électrode principale (1-2a) agencée dans la direction de l'axe du tube de la partie de collecte tubulaire (1-1) et dans une pluralité d'électrodes à aiguilles (1-2b), les électrodes à aiguilles (1-2b) étant disposées à des intervalles sur l'électrode principale (1-2a) et faisant saillie de manière radiale, et
- un moyen de précipitation (2, 12) destiné à la séparation et à la collecte de la matière particulaire détachée de la partie de collecte tubulaire (1-1),
- selon lequel ledit moyen de précipitation (2, 12) destiné à la collecte de la matière particulaire est utilisé pour être continu à la partie de décharge de gaz d'échappement (1-1b) pour la matière particulaire de haute concentration,
**caractérisé en ce que**
- un tuyau de recirculation (2-2, 12-2) destiné à provoquer la recirculation d'un gaz purifié après avoir traversé le moyen de précipitation (2, 12) est fourni depuis le moyen de précipitation (2, 12) vers un tuyau d'introduction de gaz d'échappement (1-1a) qui est monté à une extrémité amont de la partie de collecte tubulaire (1-1),
- et un amortisseur de commande de débit (8) est fourni dans le tuyau de décharge de gaz d'échappement à faible concentration de MP (3),
- et un moyen de transmission d'énergie cinétique (7) à un gaz d'échappement recirculant dans le tuyau de recirculation (2-2, 12-2) est agencé
- de sorte qu'une vélocité de débit entrant de gaz d'échappement dans le moyen de précipitation (2, 12) est commandée par la commande d'un degré d'ouverture de l'amortisseur (8) agencé dans le tuyau de décharge de gaz d'échappement destiné à la matière particulaire de faible concentration (3) et/ou un moyen de transmission d'énergie cinétique (7) au gaz d'échappement.

2. Équipement de traitement de gaz d'échappement selon la revendication 1, dans lequel l'équipement de traitement de gaz d'échappement comprend en outre, sur le tuyau de recirculation (2-2, 12-2), une partie de ramification (19) et un tuyau EGR (20) et une soupape EGR (24), le tuyau EGR (20) et la soupape EGR (24) étant reliés à la partie de ramification (19).

3. Équipement de traitement de gaz d'échappement selon la revendication 1 ou la revendication 2, dans lequel le moyen de précipitation (2) est un cyclone tangentiel (2-1).

4. Équipement de traitement de gaz d'échappement selon la revendication 1 ou la revendication 2, dans lequel le moyen de précipitation (2) est un séparateur de particules inertes de type impacteur (12-1).

5. Équipement de traitement de gaz d'échappement selon l'une quelconque des revendications 1 à 4, dans lequel un refroidisseur de gaz d'échappement (18) est monté en amont de la partie de collecte tubulaire (1-1), et un tuyau de recirculation (2-2, 12-2) est agencé entre une partie amont du refroidisseur de gaz d'échappement (18) et le moyen de précipitation (2, 12).

6. Équipement de traitement de gaz d'échappement selon l'une quelconque des revendications 1 à 5, dans lequel le moyen de transmission d'énergie cinétique (7) à un gaz d'échappement recirculant dans le tuyau de recirculation (2-2, 12-2) est conçu par un arrangement d'un souffleur ou d'une buse déjection de gaz à haute pression.

7. Équipement de traitement de gaz d'échappement selon l'une quelconque des revendications 1 à 6, dans lequel le tuyau de recirculation (2-2, 12-2) est agencé de sorte que le gaz d'échappement devant être recirculé s'écoule dans le tuyau d'introduction de gaz d'échappement (1-1a) à un angle de débit entrant présentant un angle d'inclinaison (θ) compris entre 15° et 60° par rapport au tuyau d'introduction de gaz d'échappement (1-1a).

8. Équipement de traitement de gaz d'échappement selon l'une quelconque des revendications 1 à 7, dans lequel le tuyau de recirculation (2-2, 12-2) fait saillie dans le tuyau d'introduction de gaz d'échappement (1-1a) et est agencé pour être ouvert vers une direction de débit sortant de gaz d'échappement.

9. Équipement de traitement de gaz d'échappement selon l'une quelconque des revendications 2 à 8, dans lequel un laveur (21) destiné en outre à la purification de gaz d'échappement est monté sur le tuyau EGR (20).

10. Équipement de traitement de gaz d'échappement selon l'une quelconque des revendications 2 à 9, dans lequel un refroidisseur EGR (22) destiné au refroidissement de gaz EGR est monté sur le tuyau EGR (20).

11. Équipement de traitement de gaz d'échappement selon la revendication 10, dans lequel un séparateur de vapeur (23) destiné à la séparation et l'élimination d'eau condensée est agencé dans le tuyau EGR (20) et/ou sur le côté amont de la partie de précipitation électrique (1).
